# EUROPÄISCHE PATENTSCHRIFT

(11) **EP 3 524 460 B1**
(45) Veröffentlichungstag und Bekanntmachung des Hinweises auf die Patenterteilung: **01.01.2020**
(21) Anmeldenummer: 18156488.1
(22) Anmeldetag: 13.02.2018
(51) Int. Cl.: B60K 15/035, B60K 15/04, B60K 15/03, F02M 37/00, F02M 37/20

(54) **BEFÜLLVORRICHTUNG**
FILLING DEVICE
DISPOSITIF DE REMPLISSAGE

(43) Veröffentlichungstag der Anmeldung: 14.08.2019
(73) Patentinhaber: Magna Steyr Fuel Systems GesmbH, 8261 Sinabelkirchen (AT)
(72) Erfinder: GROSS, Jörg, 50389 Wesseling (DE); REHERMANN, Andreas, 41352 Korschenbroich (DE); MAREK, Kai, 8272 Sebersdorf (AT); KAHLER, Bernd, 8010 Graz (AT)
(74) Vertreter: Zangger, Bernd

(56) Entgegenhaltungen:
- DE-A1- 10 131 493
- US-A- 5 950 688
- US-A- 6 152 196
- US-A1- 2007 289 664
- US-B1- 8 448 665

## Beschreibung

### Gebiet der Erfindung

Die vorliegende Erfindung betrifft eine Befüllvorrichtung für einen Flüssigkeitsbehälter und eine Behältervorrichtung umfassend einen Flüssigkeitsbehälter und eine solche Befüllvorrichtung.

### Stand der Technik

Flüssigkeitsbehälter, welche beispielsweise über ein Zapfventil oder mittels Kanistern oder Flaschen befüllt werden können, sind hinlänglich bekannt und werden beispielsweise zur Aufnahme von Kraftstoff und anderen Flüssigkeiten in Kraftfahrzeugen verbaut.

Derartige Flüssigkeitsbehälter können mit einem Belüftungs- und Entlüftungssystem ausgestattet sein, um die Entstehung von Unterdruck und Überdruck im Behälter zu vermeiden. Derartige Belüftungs- und Entlüftungssysteme können beispielsweise am Flüssigkeitsbehälter selbst oder in einem Verschlussdeckel des Flüssigkeitsbehälters integriert sein.

Zur Erkennung des Füllstandes und zur Vermeidung einer Überfüllung des Flüssigkeitsbehälters ist es bekannt eine Behälterwand teilweise durchsichtig auszuführen.

Insbesondere bei Flüssigkeitsbehältern die hinter anderen Fahrzeugbauteilen, wie Karosserieteilen, verbaut sind, ist eine Befüllung nur über eine Befüllleitung möglich und der Füllgrad des Behälters kaum einsehbar. Ein Befüllen kann dann beispielsweise so lange erfolgen bis die Flüssigkeit am Ende der Befüllleitung austritt, was unter anderem aufgrund von damit verbundenen Verschmutzungen nicht erwünscht ist.

Befüllvorrichtungen für einen Flüssigkeitsbehälter sind aus der US 6 152 196 A, der US 5 950 688 A und der US 8 448 665 B1 bekannt.

### Zusammenfassung der Erfindung

Es ist eine Aufgabe der Erfindung, eine Befüllvorrichtung für einen Flüssigkeitsbehälter und eine Behältervorrichtung umfassend einen Flüssigkeitsbehälter und eine solche Befüllvorrichtung anzugeben, durch welche eine Überfüllung des Flüssigkeitsbehälters vermieden werden kann.

Die Lösung der Aufgabe erfolgt durch eine Befüllvorrichtung für einen Flüssigkeitsbehälter, umfassend eine in den Flüssigkeitsbehälter mündende Befüllleitung, mit einem Befüllkopf an dem Ende der Befüllleitung, das dem Flüssigkeitsbehälter abgewandt ist, und eine Entlüftungsleitung zur Entlüftung des Flüssigkeitsbehälters, mit einem offenen Endabschnitt an dem Ende der Entlüftungsleitung, das dem Flüssigkeitsbehälter abgewandt ist, wobei die Befüllvorrichtung ein Anzeigeelement zur Anzeige eines Behälter-Voll-Zustandes des Flüssigkeitsbehälters umfasst, wobei das Anzeigeelement während einer Befüllung des Flüssigkeitsbehälters in einem Normalzustand, in dem der Flüssigkeitsbehälter nicht voll ist, durch ausströmende Luft in der Entlüftungsleitung mit einer Kraft beaufschlagt wird, sodass das Anzeigeelement einen ersten erkennbaren Zustand einnimmt, und wobei das Anzeigeelement während einer Befüllung des Flüssigkeitsbehälters im Behälter-Voll-Zustand des Flüssigkeitsbehälters nicht durch ausströmende Luft in der Entlüftungsleitung mit einer Kraft beaufschlagt wird, sodass das Anzeigeelement einen, vom ersten erkennbaren Zustand verschiedenen, zweiten erkennbaren Zustand einnimmt.

Erfindungsgemäß weist eine Befüllvorrichtung zusätzlich zu einer Befüllleitung eine zweite Leitung auf, die mit dem Flüssigkeitsbehälter strömungsverbindbar ist, nämlich eine Entlüftungsleitung. Die Entlüftungsleitung ist eine separate Leitung und kann von der Befüllvorrichtung auch räumlich getrennt sein.

An dem jeweiligen Ende der beiden Leitungen, die vom Behälter abgewandt sind, die also üblicherweise bei Benutzung der Befüllvorrichtung höher liegen, so dass die Flüssigkeit mittels Schwerkraft in den Behälter fließen kann, ist ein Befüllkopf der Befüllleitung und ein offenes Ende der Entlüftungsleitung angeordnet. "Offener" Endabschnitt bedeutet dabei, dass dieses Ende der Entlüftungsleitung direkt oder indirekt zur Umgebung hin offen ist, so dass Gas, insbesondere Luft, aus der Entlüftungsleitung austreten kann.

Der offene Endabschnitt der Entlüftungsleitung kann insbesondere in den Befüllkopf hin offen sein und somit über eine Einfüllöffnung des Befüllkopfes mit der Umgebung verbunden. Der offene Endabschnitt kann daher in den Befüllkopf übergehen oder einen Teil des Befüllkopfes bilden.

Ein Anzeigeelement zur Anzeige eines Behälter-Voll Zustandes ist so mit der Entlüftungsleitung strömungsverbunden, dass durch die Entlüftungsleitung ausströmendes Gas, insbesondere Luft, das Anzeigeelement in einen Zustand versetzt, der sich vom Zustand ohne Luftentweichung durch die Entlüftungsleitung unterscheidet. Dabei sind der erste und der zweite Zustand "erkennbar", so dass der Unterschied für einen Betrachter, insbesondere für einen Betanker des Flüssigkeitsbehälters, wahrnehmbar ist und das Anzeigeelement die Funktion der "Anzeige" auch erfüllen kann. Unter "erkennbar" wird insbesondere eine optische Erkennbarkeit verstanden, so dass das Anzeigeelement ein optisches Anzeigeelement bildet. In einer anderen Ausführung oder zusätzlich kann auch eine akustische Erkennbarkeit und somit ein akustisches Anzeigeelement verwendet werden. Ein solches akustisches Anzeigeelement kann durch einen Luftstrom in der Entlüftungsleitung beaufschlagt einen Ton oder einen anderen Ton abgeben, als ohne Luftstrom.

Erfindungsgemäß wird somit die Kraft des Luftstroms in der Entlüftungsleitung genutzt, um einem Benutzer der Vorrichtung das Ausströmen von Gas durch die Entlüftungsleitung anzuzeigen. Zusätzlich wird erfindungsgemäß sichergestellt, dass eine solche Kraft nur dann auftritt, wenn der Behälter noch nicht voll ist. Wenn der Flüssigkeitsbehälter voll ist, wird das Auftreten der Kraft vermieden, insbesondere dadurch dass die Befüllvorrichtung so eingerichtet ist, dass im vollen Zustand des Flüssigkeitsbehälters Luft nicht mehr durch die Entlüftungsleitung strömt. Somit wird im vollen Zustand des Behälters das Anzeigeelement erkennbar in den zweiten Zustand versetzt, insbesondere in einen Ruhezustand, und somit der Behälter-Voll Zustand angezeigt.

Die Befüllvorrichtung kann insbesondere so eingerichtet sein, dass die Behälter-Voll Anzeige erfolgt, wenn noch ein Restvolumen des Flüssigkeitsbehälters nicht befüllt ist, so dass noch eine geringe Restzuführung von Flüssigkeit ohne Überlauf des Behälters möglich ist.

Vorzugsweise ist zwischen Flüssigkeitsbehälter und Entlüftungsleitung ein Schwimmerventil eingerichtet, so dass im Normalzustand das Schwimmerventil offen ist und Luft aus dem Flüssigkeitsbehälter in die Entlüftungsleitung entweichen kann und im Behälter-Voll-Zustand das Schwimmerventil geschlossen ist und Luft nicht aus dem Flüssigkeitsbehälter in die Entlüftungsleitung entweichen kann. Das Schwimmerventil ist dann vorzugsweise so angeordnet dass es bereits schließt, wenn noch ein Restvolumen des Flüssigkeitsbehälters nutzbar ist.

In einer Ausführungsform kann an der Entlüftungsleitung eine Tauchrohrabschaltung ausgebildet sein, so dass, ohne zusätzliches Ventil, die Entlüftungsleitung durch die Flüssigkeit im Flüssigkeitsbehälter verschlossen wird. Hierdurch kann wieder im Normalzustand Luft aus dem Flüssigkeitsbehälter in die Entlüftungsleitung entweichen und im Behälter-Voll-Zustand Luft nicht oder in deutlich geringerem Maß aus dem Flüssigkeitsbehälter in die Entlüftungsleitung entweichen.

Das Anzeigeelement ist bevorzugt im offenen Endabschnitt der Entlüftungsleitung angeordnet und/oder im oder nahe des Befüllkopfs angeordnet.

Vorzugsweise ist das Anzeigeelement ein Windrad und der zweite erkennbare Zustand ein Stillstand oder ein langsameres Drehen des Windrades und der erste erkennbare Zustand ein Drehen oder schnelleres Drehen des Windrades. Der Luftstrom in der Entlüftungsleitung wird daher dazu genutzt das Windrad erkennbar anzutreiben.

Das Anzeigeelement kann auch ein leichter Körper sein, insbesondere eine leichte Kugel, und der erste erkennbare Zustand kann eine erste Position des leichten Elements und der zweite erkennbare Zustand eine von der ersten Position verschiedene zweite Position des leichten Elements sein. Das leichte Element kann daher durch den Luftstrom in der Entlüftungsleitung beispielsweise nach oben oder nach vorne oder hinten gedrückt werden, und kann, wenn im Behälter-Voll Zustand kein Luftstrom anliegt, mittels Schwerkraft nach unten bzw. nach hinten oder vorne fallen.

Der offene Endabschnitt der Entlüftungsleitung ist bevorzugt mit dem Befüllkopf strömungsverbunden. Insbesondere kann Luft aus der Entlüftungsleitung dann durch den Befüllkopf in die Umgebung austreten.

Am Befüllkopf ist vorzugsweise eine Belüftungs- und Entlüftungsvorrichtung angeordnet, insbesondere ein Überdruckventil und/oder ein Unterdruckventil und/oder eine Membran und/oder ein Staubfilter. Hierdurch wird der Flüssigkeitsbehälter vor unzulässigem Überdruck bzw. Unterdruck geschützt. Durch die Verwendung von Membranen bzw. Filtern, insbesondere Staubfiltern, kann ein Schmutzeintrag in den Flüssigkeitsbehälter vermieden werden.

Das Anzeigeelement ist bevorzugt am offenen Endabschnitt der Entlüftungsleitung angeordnet.

Der offene Endabschnitt der Entlüftungsleitung bildet vorzugsweise mit dem Befüllkopf eine Baueinheit oder der offene Endabschnitt der Entlüftungsleitung bildet einen Teil des Befüllkopfs der Befüllleitung. Insbesondere kann der Befüllkopf somit ein Bauteil sein, in welchem die Funktionen der Befüllung durch eine Einfüllöffnung, Austritt der Entlüftungsleitung, Anzeigeelement für Tank-Voll-Anzeige und/oder Be- und Entlüftung, beispielsweise mittels Überdruckventil und Unterdruckventil, integriert sind.

Am Endabschnitt der Entlüftungsleitung und/oder am Befüllkopf kann ein Sichtfenster angeordnet sein, so dass das Anzeigeelement von außen, insbesondere von einem Betanker, gut sichtbar ist.

Eine Behältervorrichtung umfasst erfindungsgemäß einen Flüssigkeitsbehälter und eine Befüllvorrichtung wie zuvor beschrieben, wobei die Befüllleitung und die Entlüftungsleitung in den Flüssigkeitsbehälter münden.

### Kurzbeschreibung der Zeichnungen

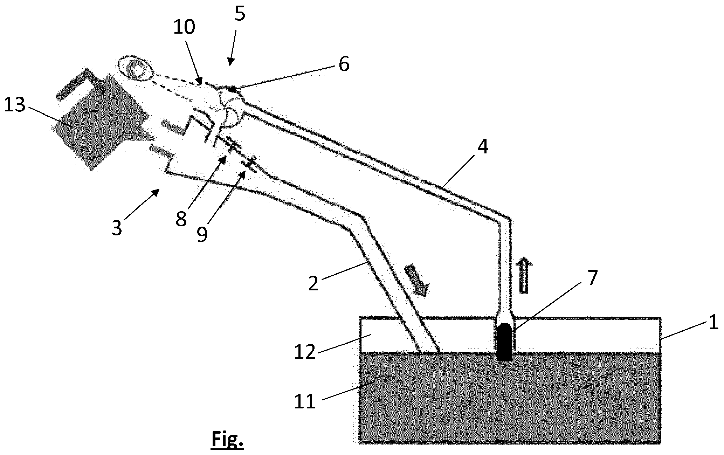

Die Erfindung wird im Folgenden beispielhaft unter Bezugnahme auf die Zeichnung beschrieben.
- Fig.: ist eine schematische Schnittansicht einer erfindungsgemäßen Befüllvorrichtung und Behältervorrichtung.

### Detaillierte Beschreibung der Erfindung

In Fig. ist eine erfindungsgemäße Befüllvorrichtung dargestellt, welche eine in einen Flüssigkeitsbehälter 1 mündende Befüllleitung 2 umfasst. Im Flüssigkeitsbehälter 1 befindet sich bereits Flüssigkeit 12 und oberhalb der Flüssigkeit 11 ein Gasraum 12, insbesondere ein Luftraum. Im Gasraum 12 ist der Flüssigkeitsbehälter 1 daher nicht mit Flüssigkeit 11 gefüllt.

Die Befüllleitung 2 weist einen Befüllkopf 3 auf, an dem Ende der Befüllleitung 2, das dem Flüssigkeitsbehälter 1 abgewandt ist. Die Befüllvorrichtung umfasst ferner eine Entlüftungsleitung 4 zur Entlüftung des Flüssigkeitsbehälters 1, die ebenfalls in den Flüssigkeitsbehälter 1 mündet und einen offenen Endabschnitt 5 aufweist, an dem Ende der Entlüftungsleitung 4, das dem Flüssigkeitsbehälter 1 abgewandt ist.

Der offene Endabschnitt 5 der Entlüftungsleitung 4 ist mit dem Befüllkopf 3 strömungsverbunden, so dass aus dem Flüssigkeitsbehälter 1 Gas durch die Entlüftungsleitung 4 und weiter durch eine Einfüllöffnung des Befüllkopfs 3 in die Umgebung gelangen kann.

Am Befüllkopf ist schematisch eine Befüllung des Flüssigkeitsbehälters 1 mittels eines Kanisters 13 durch eine Einfüllöffnung des Befüllkopfs 3 dargestellt.

Die Befüllvorrichtung umfasst ein Anzeigeelement 6, zur Anzeige eines Behälter-Voll-Zustandes des Flüssigkeitsbehälters 1, in der dargestellten Ausführungsform in Form eines Windrades bzw. Schaufelrades. Das Anzeigeelement 6 wird während einer Befüllung des Flüssigkeitsbehälters 1 in einem Normalzustand, in dem der Flüssigkeitsbehälter 1 nicht voll ist, durch ausströmende Luft in der Entlüftungsleitung 4 mit einer Kraft beaufschlagt wird, sodass das Windrad einen ersten erkennbaren Zustand einnimmt, indem nämlich das Windrad sich dreht.

Das Anzeigeelement 6 wird während einer Befüllung des Flüssigkeitsbehälters 1 im Behälter-Voll-Zustand des Flüssigkeitsbehälters 1 nicht durch ausströmende Luft in der Entlüftungsleitung 4 mit einer Kraft beaufschlagt, sodass das Anzeigeelement 6 einen, vom ersten erkennbaren Zustand verschiedenen, zweiten erkennbaren Zustand einnimmt, indem sich das Windrad nicht dreht oder erkennbar langsamer dreht.

Das Anzeigeelement 6 ist im offenen Endabschnitt 5 der Entlüftungsleitung 4 angeordnet. Dieser offene Endabschnitt 5 ist am Befüllkopf 3 ausgebildet und geht in den Befüllkopf 3 über, so dass der Endabschnitt 5 als Teil des Befüllkopfs 3 gesehen werden kann.

Am Endabschnitt 5 der Entlüftungsleitung 4 und des Befüllkopfs 3 oder als Teil des Befüllkopfs 3 ist ein Sichtfenster 10 angeordnet, so dass das Anzeigeelement 6 außerhalb der Befüllvorrichtung sichtbar ist.

Am Befüllkopf 3 ist auch eine Belüftungs- und Entlüftungsvorrichtung angeordnet, nämlich ein Überdruckventil 8 und ein Unterdruckventil 9. Diese Ventile können auch mit einem Staubfilter ausgestattet sein.

Zwischen Flüssigkeitsbehälter 1 und Entlüftungsleitung 4 ist ein Schwimmerventil 7 angeordnet, so dass im Normalzustand - in dem das Niveau der Flüssigkeit 11 ausreichend tief liegt, so dass das Schwimmerventil 7 nicht geschlossen wird - das Schwimmerventil 7 offen ist und Luft aus dem Flüssigkeitsbehälter 1 in die Entlüftungsleitung 4 entweichen kann, so dass das Windrad als Anzeigeelement 6 gedreht wird und ein normaler Befüllvorgang am Sichtfenster 10 angezeigt wird.

Im Behälter-Voll-Zustand - in dem die Flüssigkeit 11 den Schwimmer des Schwimmerventils 7 gegen dessen Ventilsitz drückt und somit schließt - ist das Schwimmerventil 7 geschlossen und Luft kann nicht aus dem Flüssigkeitsbehälter 1 in die Entlüftungsleitung 4 entweichen. Hierdurch wird das Windrad als Anzeigeelement 6 nicht oder deutlich schwächer von anströmender Luft gedreht, was durch das Sichtfenster 10 sichtbar ist.

Das Anzeigeelement 6 kann auch beispielsweise ein leichter Körper, insbesondere eine leichte Kugel, sein, so dass die Kugel wenn sie nicht durch entweichende Luft angeströmt wird aus einer angehobenen Position in eine Ruhe-Position fällt.

Die in Fig. dargestellt Befüllvorrichtung bildet zusammen mit dem Flüssigkeitsbehälter 1, in welchen die Befüllleitung 2 und die Entlüftungsleitung 4 münden, eine erfindungsgemäße Behältervorrichtung.

### Bezugszeichenliste

- 1: Flüssigkeitsbehälter
- 2: Befüllleitung
- 3: Befüllkopf
- 4: Entlüftungsleitung
- 5: offener Endabschnitt
- 6: Anzeigeelement
- 7: Schwimmerventil
- 8: Überdruckventil
- 9: Unterdruckventil
- 10: Sichtfenster
- 11: Flüssigkeit
- 12: Gasraum
- 13: Kanister

## Patentansprüche

1. Befüllvorrichtung für einen Flüssigkeitsbehälter (1), umfassend eine in den Flüssigkeitsbehälter (1) mündende Befüllleitung (2), mit einem Befüllkopf (3) an dem Ende der Befüllleitung (2), das dem Flüssigkeitsbehälter (1) abgewandt ist, und eine Entlüftungsleitung (4) zur Entlüftung des Flüssigkeitsbehälters (1), mit einem offenen Endabschnitt (5) an dem Ende der Entlüftungsleitung (4), das dem Flüssigkeitsbehälter (1) abgewandt ist, wobei die Befüllvorrichtung ein Anzeigeelement (6) zur Anzeige eines Behälter-Voll-Zustandes des Flüssigkeitsbehälters (1) umfasst, **dadurch gekennzeichnet, dass** das Anzeigeelement (6) während einer Befüllung des Flüssigkeitsbehälters (1) in einem Normalzustand, in dem der Flüssigkeitsbehälter (1) nicht voll ist, durch ausströmende Luft in der Entlüftungsleitung (4) mit einer Kraft beaufschlagt wird, sodass das Anzeigeelement (6) einen ersten erkennbaren Zustand einnimmt, und wobei das Anzeigeelement (6) während einer Befüllung des Flüssigkeitsbehälters (1) im Behälter-Voll-Zustand des Flüssigkeitsbehälters (1) nicht durch ausströmende Luft in der Entlüftungsleitung (4) mit einer Kraft beaufschlagt wird, sodass das Anzeigeelement (6) einen, vom ersten erkennbaren Zustand verschiedenen, zweiten erkennbaren Zustand einnimmt.

2. Befüllvorrichtung nach Anspruch 1,
**dadurch gekennzeichnet, dass** zwischen Flüssigkeitsbehälter (1) und Entlüftungsleitung (4) ein Schwimmerventil (7) eingerichtet ist, so dass im Normalzustand das Schwimmerventil (7) offen ist und Luft aus dem Flüssigkeitsbehälter (1) in die Entlüftungsleitung (4) entweichen kann und im Behälter-Voll-Zustand das Schwimmerventil (7) geschlossen ist und Luft nicht aus dem Flüssigkeitsbehälter (1) in die Entlüftungsleitung (4) entweichen kann.

3. Befüllvorrichtung nach zumindest einem der vorhergehenden Ansprüche,
**dadurch gekennzeichnet, dass** das Anzeigeelement (6) im offenen Endabschnitt (5) der Entlüftungsleitung (4) angeordnet ist und/oder im oder nahe des Befüllkopfs (3) angeordnet ist.

4. Befüllvorrichtung nach zumindest einem der vorhergehenden Ansprüche,
**dadurch gekennzeichnet, dass** das Anzeigeelement (6) ein Windrad ist und der zweite erkennbare Zustand ein Stillstand oder ein langsameres Drehen des Windrades ist und der erste erkennbare Zustand ein Drehen oder schnelleres Drehen des Windrades ist.

5. Befüllvorrichtung nach zumindest einem der vorhergehenden Ansprüche,
**dadurch gekennzeichnet, dass** das Anzeigeelement (6) ein leichter Körper, insbesondere eine leichte Kugel, ist und der erste erkennbare Zustand eine erste Position des leichten Elements ist und der zweite erkennbare Zustand eine von der ersten Position verschiedene zweite Position des leichten Elements ist, beispielsweise eine tiefer liegende Position.

6. Befüllvorrichtung nach zumindest einem der vorhergehenden Ansprüche,
**dadurch gekennzeichnet, dass** der offene Endabschnitt (5) der Entlüftungsleitung (4) mit dem Befüllkopf (3) strömungsverbunden ist.

7. Befüllvorrichtung nach zumindest einem der vorhergehenden Ansprüche,
**dadurch gekennzeichnet, dass** am Befüllkopf (3) eine Belüftungs- und Entlüftungsvorrichtung angeordnet ist, insbesondere ein Überdruckventil (8) und/oder ein Unterdruckventil (9) und/oder eine Membran und/oder ein Staubfilter.

8. Befüllvorrichtung nach zumindest einem der vorhergehenden Ansprüche,
**dadurch gekennzeichnet, dass** der offene Endabschnitt (5) der Entlüftungsleitung (4) mit dem Befüllkopf (3) eine Baueinheit bildet oder der offene Endabschnitt (5) der Entlüftungsleitung (4) einen Teil des Befüllkopfs (3) der Befüllleitung (2) bildet.

9. Befüllvorrichtung nach zumindest einem der vorhergehenden Ansprüche,
**dadurch gekennzeichnet, dass** am Endabschnitt (5) der Entlüftungsleitung (4) und/oder am Befüllkopf (3) ein Sichtfenster (10) angeordnet ist, so dass das Anzeigeelement (6) von außen sichtbar ist.

10. Behältervorrichtung umfassend einen Flüssigkeitsbehälter (1) und eine Befüllvorrichtung nach zumindest einem der vorhergehenden Ansprüche, wobei die Befüllleitung (2) und die Entlüftungsleitung (4) in den Flüssigkeitsbehälter (1) münden.

## Claims

1. Filling device for a liquid container (1) comprising a filling pipe (2) discharging into the liquid container (1), having a filling head (3) at the end of the filling pipe (2) which faces away from the liquid container (1), and a venting pipe (4) for venting the liquid container (1), having an open end section (5) at the end of the venting pipe (4) which faces away from the liquid container (1), whereby the filling device comprises an indicator element (6) for indicating a "container full" condition of the liquid container (1), **characterized in that** the indicator element (6) during filling of the liquid container (1) in a normal state, in which the liquid container (1) is not full, is impinged upon by outflowing air in the venting pipe (4) at a force such that the indicator element (6) assumes a first recognizable condition, and whereby the indicator element (6) during filling of the liquid container (1) in the "container full" condition of the liquid container (1) is not impinged on by outflowing air in the venting pipe (4) at a force such that the indicator element (6) assumes a second recognizable condition different from the first recognizable condition.

2. Filling device according to Claim 1,
**characterized in that** a float valve (7) is arranged between the liquid container (1) and the venting pipe (4) so that, in the normal condition, the float valve (7) is open and air is able to escape from the liquid container (1) into the venting pipe (4) and, in the "container full" condition, the float valve (7) is closed and air is not able to escape from the liquid container (1) into the venting pipe (4).

3. Filling device according to at least one of the preceding claims,
**characterized in that** the indicator element (6) is arranged in the open end section (5) of the venting pipe (4) and/or in or close to the filling head (3).

4. Filling device according to at least one of the preceding claims,
**characterized in that** the indicator element (6) is a wind wheel, and the second recognizable condition is a standstill or a slower rotation of the wind wheel, and the first recognizable condition is a rotation or a more rapid rotation of the wind wheel.

5. Filling device according to at least one of the preceding claims,
**characterized in that** the indicator element (6) is a lightweight body, in particular a lightweight ball, and the first recognizable condition is a first position of the lightweight element and the second recognizable condition is a second position of the lightweight element different from the first position, for example a position lying on a lower level.

6. Filling device according to at least one of the preceding claims,
**characterized in that** the open end section (5) of the venting pipe (4) is fluidically connected to the filling head (3).

7. Filling device according to at least one of the preceding claims,
**characterized in that** an aeration and venting device, in particular an overpressure relief valve (8) and/or an underpressure relief valve (9) and/or a membrane and/or a dust filter, is arranged on the filling head (3).

8. Filling device according to at least one of the preceding claims,
**characterized in that** the open end section (5) of the venting pipe (4) forms a structural unit together with the filling head (3), or the open end section (5) of the venting pipe (4) forms a part of the filling head (3) of the filling pipe (2).

9. Filling device according to at least one of the preceding claims,
**characterized in that** a viewing window (10) is arranged on the end section (5) of the venting pipe (4) and/or on the filling head (3), so that the indicator element (6) is visible from the outside.

10. Container device comprising a liquid container (1) and a filling device according to at least one of the preceding claims, whereby the filling pipe (2) and the venting pipe (4) discharge into the liquid container (1).

## Revendications

1. Dispositif de remplissage pour un récipient de liquide (1), comportant une conduite de remplissage (2) débouchant dans le récipient de liquide (1), comprenant une tête de remplissage (3) à l'extrémité de la conduite de remplissage (2) qui est opposée au récipient de liquide (1), et une conduite d'aération (4) pour l'aération du récipient de liquide (1), comprenant une partie d'extrémité ouverte (5) à l'extrémité de la conduite d'aération (4) qui est opposée au récipient de liquide (1), le dispositif de remplissage comportant un élément indicateur (6) pour indiquer un état rempli du récipient de liquide (1), **caractérisé en ce que** l'élément indicateur (6) est, pendant un remplissage du récipient de liquide (1), dans un état normal dans lequel le récipient de liquide (1) n'est pas plein, soumis à une force par l'air sortant dans la conduite d'aération (4), de telle sorte que l'élément indicateur (6) adopte un premier état détectable, et l'élément indicateur (6) n'étant pas, pendant un remplissage du récipient de liquide (1), dans l'état rempli du récipient de liquide (1), soumis à une force par l'air sortant dans la conduite d'aération (4), de telle sorte que l'élément indicateur (6) adopte un deuxième état détectable différent du premier état détectable.

2. Dispositif de remplissage selon la revendication 1,
**caractérisé en ce qu'**une soupape à flotteur (7) entre le récipient de liquide (1) et la conduite d'aération (4) est conçue de telle sorte qu'à l'état normal la soupape à flotteur (7) est ouverte et de l'air peut s'échapper du récipient de liquide (1) dans la conduite d'aération (4) et qu'à l'état plein du récipient, la soupape à flotteur (7) est fermée et l'air ne peut pas s'échapper du récipient de liquide (1) dans la conduite d'aération (4) .

3. Dispositif de remplissage selon au moins l'une des revendications précédentes,
**caractérisé en ce que** l'élément indicateur (6) est disposé dans la partie d'extrémité ouverte (5) de la conduite d'aération (4) et/ou est disposé dans la tête de remplissage (3) ou à proximité de celle-ci.

4. Dispositif de remplissage selon au moins l'une des revendications précédentes,
**caractérisé en ce que** l'élément indicateur (6) est une roue à vent et le deuxième état détectable est un arrêt ou une rotation plus lente de la roue à vent et le premier état détectable est une rotation ou une rotation plus rapide de la roue à vent.

5. Dispositif de remplissage selon au moins l'une des revendications précédentes,
**caractérisé en ce que** l'élément indicateur (6) est un corps léger, en particulier une bille légère, et le premier état détectable est une première position de l'élément léger et le deuxième état détectable est une deuxième position de l'élément léger différente de la première position, par exemple une position située plus bas.

6. Dispositif de remplissage selon au moins l'une des revendications précédentes,
**caractérisé en ce que** la partie d'extrémité ouverte (5) de la conduite d'aération (4) est en liaison fluidique avec la tête de remplissage (3).

7. Dispositif de remplissage selon au moins l'une des revendications précédentes,
**caractérisé en ce qu'**un dispositif d'alimentation en air et d'aération est disposé au niveau de la tête de remplissage (3), en particulier une soupape de surpression (8) et/ou une soupape de dépression (9) et/ou une membrane et/ou un filtre antipoussière.

8. Dispositif de remplissage selon au moins l'une des revendications précédentes,
**caractérisé en ce que** la partie d'extrémité ouverte (5) de la conduite d'aération (4) forme avec la tête de remplissage (3) une unité structurale ou la partie d'extrémité ouverte (5) de la conduite d'aération (4) forme une partie de la tête de remplissage (3) de la conduite de remplissage (2).

9. Dispositif de remplissage selon au moins l'une des revendications précédentes,
**caractérisé en ce qu'**une fenêtre d'inspection (10) est disposée au niveau de la partie d'extrémité (5) de la conduite d'aération (4) et/ou au niveau de la tête de remplissage (3), de telle sorte que l'élément indicateur (6) soit visible depuis l'extérieur.

10. Dispositif de récipient comportant un récipient de liquide (1) et un dispositif de remplissage selon au moins l'une des revendications précédentes, la conduite de remplissage (2) et la conduite d'aération (4) débouchant dans le récipient de liquide (1).
